# EUROPEAN PATENT SPECIFICATION

(11) **EP 0 517 168 B1**
(45) Date of publication and mention of the grant of the patent: **08.04.1998**
(21) Application number: 92109308.4
(22) Date of filing: 02.06.1992
(51) Int. Cl.: B23C 1/02

(54) **Chip-forming machining unit**
Spanabhebende Bearbeitungseinheit
Ensemble d'usinage par enlèvement de copeaux

(30) Priority: 07.06.1991 IT TO910132 U
(43) Date of publication of application: 09.12.1992
(73) Proprietor: COMAU S.p.A., 10095 Grugliasco (Torino) (IT)
(72) Inventor: Martinis, Marco, I-10146 Torino (IT)
(74) Representative: Plebani, Rinaldo

(56) References cited:
- EP-A- 0 152 081
- DE-A- 1 962 484
- DE-A- 2 902 920
- DE-A- 3 101 781
- DE-C- 574 507

## Description

The present invention relates to a chip-forming machining unit of the type defined in the preamble of claim 1.

In the majority of cases, chip-forming machining units are set up adjacent to the worktable, to which the workpieces are fed successively, preferably by means of a feed unit. The machining unit presents a toolhead moving in relation to the work along at least three perpendicular axes and by means of three carriages or slides connected and usually moved in relation to one another by a drive device.

Constructionwise, known machining units substantially differ as regards the mutual arrangement of the slides, and can be classified into two distinct groups.

As shown and described, for example, in EP-A-0 152 081 representing the closest prior art or DE 29 02 920, the units of a first group comprise a first slide traveling in a main direction to and from the work along a slideway formed in the bed, and supporting a second slide traveling perpendicular to the main direction, and an upright defining the tool carriage slideway.

In the second group, the first slide travels perpendicular to the main direction, and supports an upright defining the tool carriage slideway and connected to the first slide by slideways enabling it to travel together with the first slide, and to and from the work in the main direction.

Though universally employed, known units of the aforementioned type present several drawbacks. While those in the first group provide, on the one hand, for troublefree access to the work area, by virtue of the first slide, as it withdraws from the work, withdrawing substantially the entire unit, in particular the toolhead, thus enabling troublefree maintenance; on the other, they are highly unstable, especially when the first slide is operated at high speed for stepping up output. Under such conditions, in fact, the moving mass, equal to the total mass of the slideways, is subject to a high degree of acceleration, particularly in the end-of-stroke position, thus resulting in a high degree of inertia. Moreover, as the center of gravity of the moving mass is normally a considerable distance from the slideway of the first slide, this is subject to torques which not only result in increased stress on the slideway, but also affect vibration of the unit structure, which, under such conditions, vibrates at frequencies seriously affecting its dynamic stability.

While providing for a better distribution of the moving masses and, thus, for reducing inertia and both static and dynamic stress, the units in the second group permit only limited access to the work area, thus hindering maintenance work and manual tool-change operations.

It is an object of the present invention to provide a machining unit designed to overcome the aforementioned drawbacks, i.e. which presents geometrical characteristics enabling high-speed operation of each slide, and which provides for troublefree access to both the toolhead and workpiece.

According to the present invention, there is provided a chip-forming machining unit as defined in claim 1.

A non-limiting embodiment of the present invention will be described by way of example with reference to the accompanying drawings, in which:
Fig.1 shows a plan view, substantially in blocks, of a work station featuring a chip-forming machining unit in accordance with the present invention;
Fig.2 shows an enlarged schematic plan view of a preferred embodiment of the Fig.1 unit;
Fig.3 shows a section along line III-III in Fig.2;
Fig.4 shows a front view in the direction of arrow A in Fig.2.

Number 1 in the accompanying drawings indicates a chip-forming machining unit.

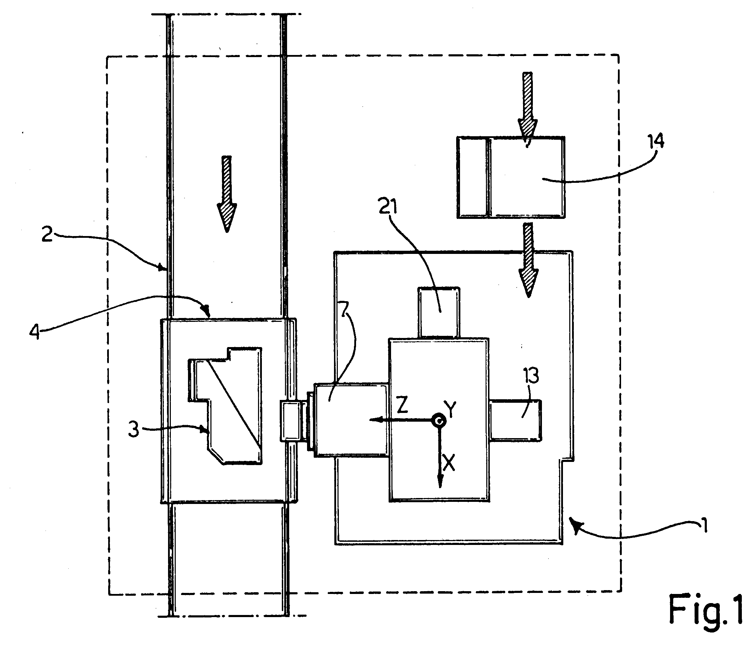

As shown in Fig.1, unit 1 is set up in a work station, adjacent to a feed unit 2 for successively feeding workpieces 3 (only one of which is shown) on to a worktable indicated as a whole by 4.

As shown in Fig.s 2, 3 and 4, unit 1 comprises a bed 5, and a unit 6 for moving the toolhead 7 of unit 1 in relation to bed 5 and workpiece 3 on table 4 (Fig.1).

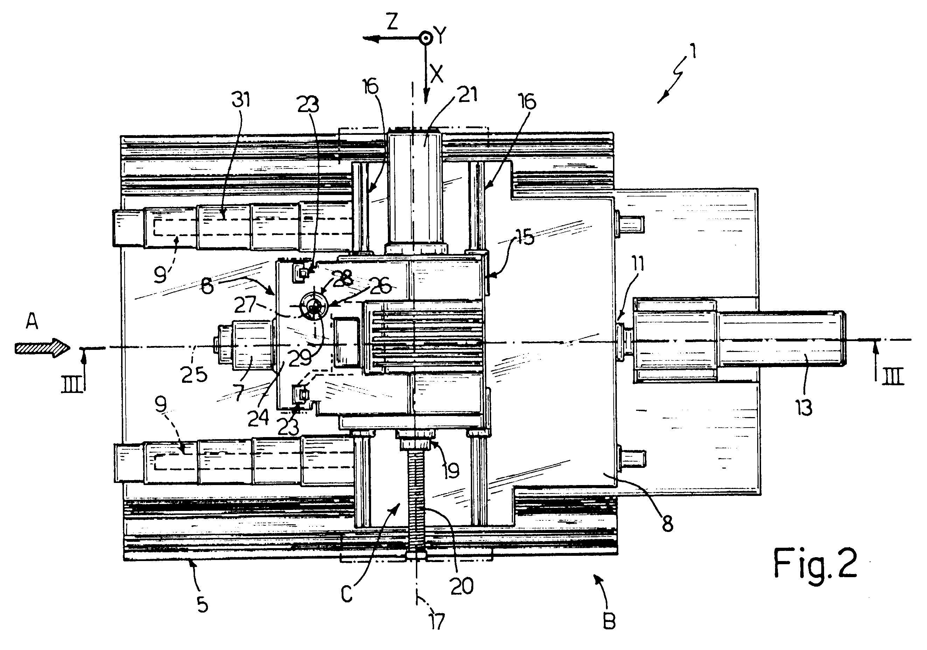

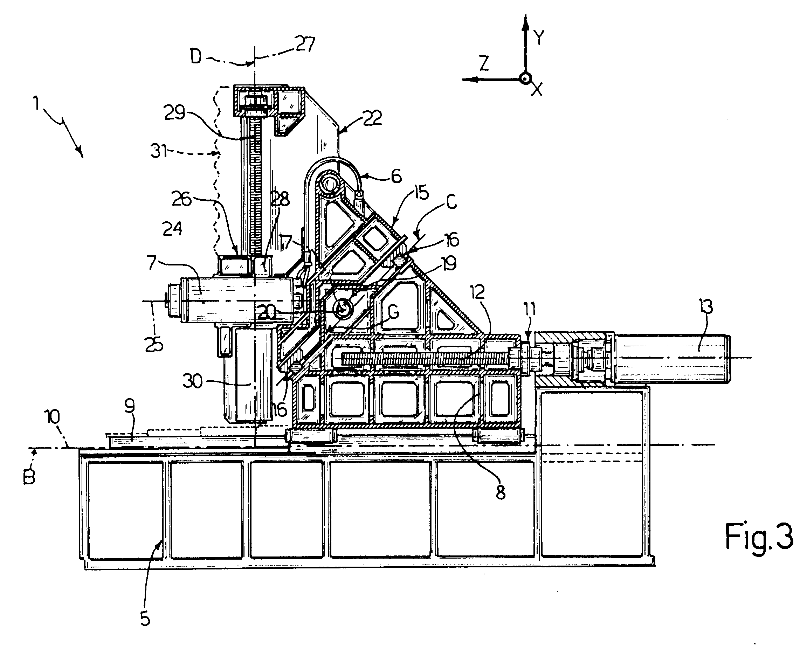

As shown in Fig.s 3 and 4, unit 6 comprises a first slide 8 mounted in axially-sliding manner on two known slideways 9 (not described) integral with base 5, so as to move to and from workpiece 3 along an axis 10 parallel to reference axis Z (Fig.s 2, 3, 4) and lying in a plane B (Fig.3) parallel to the Fig.2 plane. More specifically, first slide 8 is moved along axis 10 by a screw-nut-screw device 11, the screw 12 of which extends parallel to and over slideways 9, so that it is adjacent to the center of gravity G of unit 6 (Fig.3). Screw 12 is powered by an electric motor 13 coaxial with screw 12 and connected to a known control system 14 shown schematically in Fig.1.

As shown in Fig.3, unit 6 also comprises a second slide 15 mounted on a known slideway 16 (not described). Slideway 16 is integral with first slide 8, extends substantially on the opposite side of screw 12 to slideways 9 formed in bed 5, and directs second slide 15 along an axis 17 parallel to axis X and lying in a plane C (Fig.3) sloping downwards towards workpiece 3 and forming a substantially 45° angle with slideways 9 and plane B containing axis 10. More specifically, second slide 15 is moved along axis 17 in plane C by a screw-nut-screw actuating device 19 (Fig.s 2 to 4), the screw 20 of which extends over and crosswise in relation to screw 12 controlling first slide 8, and is powered by an electric motor 21 (Fig.s 2 and 4) coaxial with screw 20 and also connected to control system 14.

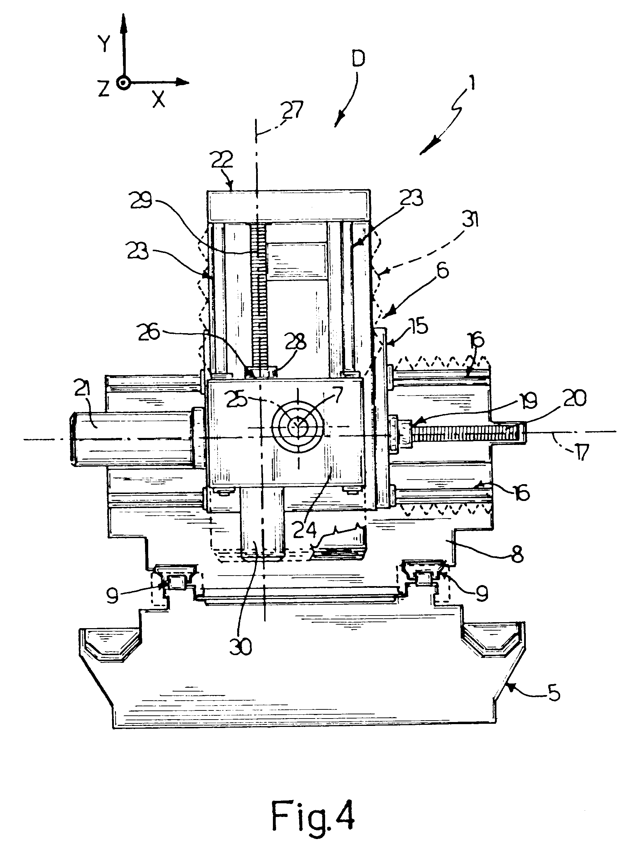

As shown in Fig.3 and, particularly, Fig.4, second slide 15 comprises an upright 22 defining a known slideway 23 (Fig.s 2 and 4) formed facing workpiece 3 and mounted with a third slide 24 supporting toolhead 7, which is preferably an electromagnetic chuck with its axis of rotation 25 parallel to axis Z. Third slide 24 is connected to a screw-nut-screw actuating device 26 (Fig.s 2, 3, 4) so as to travel along an axis 27 parallel to axis Y and lying in a plane D intersecting plane B containing axis 10 in such a manner as to form a right-angle dihedral. More specifically, plane C containing axis 17 extends inside said dihedral, and also forms a substantially 45° angle with plane D containing axis 27.

Actuating device 26 comprises a nut screw 28 integral with third slide 24; and a control screw 29 extending perpendicular to axis 25 and adjacent to toolhead 7. Screw 29 is powered by an electric motor 30 integral with third slide 24, extending between slide 24 and bed 5 (Fig.s 3 and 4), and connected to control system 14 (Fig.1).

As shown in Fig.s 2 to 4, each slideway 9, 16 and 23 is protected by a mobile device 31, which, in addition to preventing fouling of the slideways by machining chips, also provides for enabling high-speed displacement of the respective slide 8, 15 and 24.

The advantages of machining unit 1 according to the present invention will be clear from the foregoing description.

In particular, by virtue of the arrangement of second slide 15, unit 6 controlling toolhead 7 presents an extremely compact, relatively lightweight structure, which, in addition to improving the static performance of unit 1, also provides for improving the dynamic stability of unit 6 as a whole, particularly when moved at high speed in relation to bed 5. In fact, the arrangement and, consequently, the weight distribution of slides 8, 15 and 24 of unit 6 provide for bringing the center of gravity G of unit 6 decidedly closer to bed 5 and in particular to slideways 9 of first slide 8. As inertial forces are known to be applied at the center of gravity of the moving structure, the above design characteristic provides for reducing torque due to inertia, and, consequently, stress on the slideway of first slide 8.

Moreover, under high-speed conditions of first slide 8, the dynamic performance of unit 6 is further improved by the actuating stress of first slide 8 being exerted along a line close to center of gravity G.

The design of unit 1 provides, in one single operation, for withdrawing all the unit 6 slides and toolhead 7 from the work area, thus enabling troublefree access to workpiece 3 and maintenance of worktable 4, as well as for troublefree manual tool change by virtue of withdrawing unit 6.

Finally, the particular arrangement of screw 29 provides for strengthening upright 22 integral with second slide 15.

To those skilled in the art it will be clear that changes may be made to unit 1 as described and illustrated herein without, however, departing from the scope of the present invention as claimed. For example, changes may be made to the manner in which slides 8, 15 and 24 are moved in relation to respective slideways 9, 16 and 23; or to the angle of plane C containing axis 17 in relation to planes B and D, which may form other than a right-angle dihedral.

## Claims

1. A chip-forming machining unit (1) comprising a slide (8) traveling along a first axis (10) in a first plane (B); a slide (15) traveling, in relation to said slide (8) traveling along said first axis (10), along a second axis (17) perpendicular to said first axis (10) and lying in a second plane (C); and a further slide (24) traveling along a third axis (27) substantially perpendicular to said first and second axes (10, 17) and lying in a third plane (D) intersecting said first plane (B) so as to form a right-angle dihedral; said second plane (C) extending inside said right-angle dihedral and forming a substantially 45° angle with one of said first and third planes (B, D), characterized by the fact that said slide (8) traveling along said first axis (10) is driven by an actuating device (11) the stress exerted by which is directed in a straight line parallel to and a given distance from said first plane (B), and at least adjacent to the center of gravity (G) of said slides (8, 15, 24); the distance of said straight line from the center of gravity (G) is less than a distance between the straight line itself and the said first plane (B).

2. A machining unit as claimed in claim 1, characterized by the fact that said slide (24) traveling along said third axis (27) supports a toolhead (7), and is driven by an actuating device (26) the stress exerted by which is directed in a straight line parallel to said third plane (D) and adjacent to said toolhead (7).

## Patentansprüche

1. Spanabhebende Bearbeitungseinheit (1) mit einem Schlitten (8), der sich entlang einer ersten Achse (10) in einer ersten Ebene (B) bewegt; einem Schlitten (15), der sich in Bezug auf den sich entlang der ersten Achse (10) bewegenden Schlitten (8) entlang einer zweiten Achse (17) bewegt, die senkrecht zu der ersten Achse (10) verläuft und in einer zweiten Ebene (C) liegt; und einem weiteren Schlitten (24), der sich entlang einer dritten Achse (27) bewegt, die im wesentlichen senkrecht zu der ersten und der zweiten Achse (10, 17) verläuft und in einer dritten Ebene (D) liegt, welche die erste Ebene (B) unter Bildung eines rechtwinkligen Flächenwinkels schneidet; wobei die zweite Ebene (C) innerhalb des rechtwinkligen Flächenwinkels verläuft und unter einen Winkel von ungefähr 45° zu der ersten oder der dritten Ebene (B, D) verläuft, dadurch gekennzeichnet, daß der sich entlang der ersten Achse (10) bewegende Schlitten (8) von einer Antriebsvorrichtung (11) angetrieben wird, deren Kraft in Richtung einer Geraden ausgeübt wird, welche parallel und in vorgegebenem Abstand zu der ersten Ebene (B) verläuft, und zwar zumindest in der Nähe des Schwerpunktes (G) der Schlitten (8, 15, 24); wobei der Abstand der Geraden von dem Schwerpunkt (G) kleiner als der Abstand zwischen der Geraden selbst und der ersten Ebene (B) ist.

2. Bearbeitungseinheit nach Anspruch 1, dadurch gekennzeichnet, daß der sich entlang der dritten Achse (27) bewegende Schlitten (24) einen Werkzeugkopf (7) trägt und von einer Antriebsvorrichtung (26) angetrieben wird, deren Kraft in Richtung einer Geraden ausgeübt wird, die parallel zu der dritten Ebene (D) und in der Nähe des Werkzeugkopfes (7) verläuft.

## Revendications

1. Unité d'usinage (1) par enlèvement de copeaux, comprenant un chariot (8) se déplaçant suivant un premier axe (10) dans un premier plan (B) ; un chariot (15) se déplaçant, par rapport audit chariot (8) mobile suivant ledit premier axe (10), suivant un deuxième axe (17) perpendiculaire audit premier axe (10) et situé dans un deuxième plan (C) ; et un autre chariot (24) se déplaçant suivant un troisième axe (27), sensiblement perpendiculaire auxdits premier et deuxième axes (10, 17) et situé dans un troisième plan (D), qui coupe ledit premier plan (B) de manière à former un dièdre à angle droit ; ledit deuxième plan (C) s'étendant à l'intérieur dudit dièdre à angle droit et formant un angle sensiblement de 45° avec l'un desdits premier et troisième plans (B, D), caractérisée par le fait que ledit chariot (8), se déplaçant suivant ledit premier axe (10), est entraîné par un dispositif d'actionnement (11), qui exerce des efforts dirigés suivant une ligne droite, parallèle audit premier plan (B) et à une distance donnée par rapport à celui-ci, et au moins adjacents au centre de gravité (G) desdits chariots (8, 15, 24) ; la distance de ladite ligne droite au centre de gravité (G) étant inférieure à la distance entre la ligne droite même et ledit premier plan (B).

2. Unité d'usinage selon la revendication 1, caractérisée par le fait que ledit chariot (24), se déplaçant suivant ledit troisième axe (27), porte une tête porte-outil (7) et est entraîné par un dispositif d'actionnement (26), qui exerce des efforts dirigés suivant une ligne droite, parallèle audit troisième plan (D) et adjacente à ladite tête porte-outil (7).
